**Europäisches Patentamt**

**European Patent Office**

**Office européen des brevets**

(19)

(11) Numéro de publication: **0 273 813 B1**

# (12) FASCICULE DE BREVET EUROPEEN

(45) Date de publication du fascicule du brevet:
**05.09.90**

(21) Numéro de dépôt: **87402751.9**

(22) Date de dépôt: **03.12.87**

(51) Int. Cl.⁵: **G01G 19/08,** G01G 23/00, B22D 41/12

(54) **Dispositif de support et de mesure d'une charge.**

(30) Priorité: **04.12.86 FR 8616997**

(43) Date de publication de la demande:
**06.07.88 Bulletin 88/27**

(45) Mention de la délivrance du brevet:
**05.09.90 Bulletin 90/36**

(84) Etats contractants désignés:
**AT BE DE ES FR IT SE**

(56) Documents cités:
**EP-A- 0 093 660**
**EP-A- 0 189 022**
**GB-A- 2 109 565**
**US-A- 3 858 672**

(73) Titulaire: **CLECIM, 107 boulevard de la Mission Marchand, F-92400 Courbevoie(FR)**

(72) Inventeur: **Vatant, Robert, 10 rue des Charmilles, F-42400 Saint Chamond(FR)**

(74) Mandataire: **Berogin, Francis et al, CABINET HARLE & PHELIP 21, rue de la Rochefoucauld, F-75009 Paris(FR)**

ACTORUM AG

## Description

L'invention a pour objet un dispositif de support et de mesure d'une charge contenue dans une enceinte et s'applique en particulier aux wagons poches de transport du métal liquide .

Pour transporter le métal liquide du haut fourneau aux installations de traitement et de transformation, on utilise des wagons-poches comprenant une enceinte allongée supportée par deux fusées ou deux bandages placés à ses deux extrémités et alignés suivant un axe autour duquel l'enceinte peut tourner pour déverser le métal par un orifice. Les deux fusées ou bandages reposent donc sur des organes de support agencés de façon à leur permettre de tourner autour de l'axe . C'est pourquoi chaque fusée ou bandage est monté rotatif autour de son axe sur un châssis auxiliaire reposant lui-même sur un bâti principal qui prend appui, directement ou indirectement, sur un ou plusieurs boggies, le transport de la poche se faisant généralement sur une voie ferrée .

Il est nécessaire , avant et en cours de coulée , de connaître la quantité de métal liquide contenue dans la poche et c'est pourquoi châssis auxiliaire de support de chaque fusée dispose d'une certaine liberté de mouvement au moins dans le sens vertical et prend appui sur le bâti principal , par l'intermédiaire d'un ou plusieurs organes d'appui qui jouent en même temps le rôle de peson permettant de connaître la charge appliquée sur chaque fusée .

Ces charges sont extrêmement importantes , par exemple comprises entre 200 et 500 tonnes et il est nécessair de donner au châssis auxiliaire une certaine possibilité de déplacement de faible amplitude par rapport au châssis principal et c'est pourquoi la liaison s'effectue généralement par des rotules ou d'autres systèmes articulés.

Dans une disposition classique, le polygone de sustentation du châssis auxiliaire est constitué par trois ou même quatre pesons sur lesquels est appliquée la charge.Il faut alors stabiliser le système au moyen de barres, bielles ou lames flexibles qui perturbent les mesures .

Dans une autre disposition, qui fait l'objet du brevet français n° 82 07385 de la même Société (EP-A 0 093 660), le châssis auxiliaire est monté oscillant sur un appui central placé à un niveau inférieur à celui de la fusée et qui repose avec une possibilité d'articulation sur un peson unique ayant la forme d'un vérin à axe vertical susceptible de jouer simultanément le rôle d'articulation et de dispositif de pesage .Le vérin comprend en effet un piston monté coulissant ,dans un corps en délimitant une chambre de pression remplie d'un fluide telle qu'une graisse épaisse. La pression dans le vérin est représentative de la charge appliquée, cette dernière peut être déterminée par la mesure de cette pression .

Selon une autre caractéristique , l'appui articulé qu'il est nécessaire de ménager entre le châssis auxiliaire et le bâti principal est obtenu en laissant un faible jeu entre le piston et le corps du vérin , le centrage du piston étant réalisé par l'intermédiaire d'une rotule ou d'un système de bielle .Le piston est centré dans le plan vertical de symétrie passant par l'axe de rotation de façon que la pression de la graisse corresponde bien à la charge appliquée .

Cependant , la poche étant remplie d'un métal liquide le centre de gravité n'est pas toujours placé exactement dans le plan vertical passant par l'axe du fait des mouvements du métal liquide et surtout lors du basculement de la poche autour de son axe pour le déversement du métal .Le centre de gravité s'écarte alors légèrement d'un côté ou de l'autre du plan vertical de symétrie.Il en résulte un effet de basculement du châssis de support de la fusée qui doit donc être maintenu latéralement .Dans les dispositions classiques telles que celles du brevet 82 07385, l'organe central d'appui constitué par le vérin est associé à deux organes d'appui latéraux constitués par des lisoirs horizontaux ménagés sur le bâti principal de part et d'autre du plan axial et sur lesquels s'appuient des patins montés à l'extrémité de bras solidaires du châssis auxiliaire de support .

Une partie du poids qui dépend du rapport entre le décalage latéral du centre de gravité et l'écartement du lissoir par rapport au plan vertical axial est donc encaissée par l'un ou l'autre lissoir selon le sens de décalage .Il en résulte une erreur appréciable sur la mesure de la charge effectuée par la mesure de la pression du vérin central. L'invention a pour objet de nouvelles dispositions permettant de remédier à cet inconvénient .

A cet effet, selon l'invention,les moyens d'appui latéraux du châssis auxiliaire de chaque fusée sont agencés de façon à exercer sur ledit châssis auxiliaire , par appui sur le bâti fixe, un effort résistant au basculement dont la résultante, dans la direction verticale de mesure de la charge, soit nulle ou négligeable .

Dans un premier mode de réalisation avantageux, les moyens d'appui latéraux comprennent, de chaque côté du plan vertical axial, un plot à face sensiblement verticale , ménagé sur le côté du châssis de support et prenant appui sur une butée fixée sur le bâti principal et constituant un lisoir à face verticale .De préférence, la face d'appui de chaque plot a la forme d'une portion de surface sphérique dont le centre est placé dans le plan vertical axial au niveau moyen du plot.

Dans un autre mode de réalisation avantageux, les moyens d'appui latéraux de chaque châssis de support comprennent deux manivelles parallèles calées en rotation sur un arbre de torsion monté sur le bâti principal et perpendiculaire au plan vertical axial , lesdites manivelles étant reliées respectivement, chacune par une bielle arti culée à ses extrémités, à deux points d'attache sur le châssis écarté symétriquement de part et d'autre du plan vertical axial.

Les deux fusées ou bandages sont montés rotatifs sur leur châssis de support par des moyens classiques . Par exemple, chaque fusée peut être montée rotative dans un palier dont le corps est fixé sur le châssis de support si la fusée est de dimension relativement réduite . Si la fusée ou bandage est important , elle peut reposer par l'intermédiaire d'une surface cylindrique sur deux galets montés rotatifs autour d'axes paralèles à celui de la fusée respectivement sur deux bras du châssis, celui-ci ayant la forme d'un berceau en forme de V dont la partie centrale repose sur l'organe central d'appui et de mesure.

Mais l'invention sera mieux comprise par la description suivante de certains modes de réalisation particuliers , donnés à titre d'exemples représentés sur les dessin annexés.

Fig.1 est une vue schématique d'ensemble, en perspective , d'un wagon-poche équipé d'un dispositif de support selon l'invention;

Fig.2 est une coupe schématique par un plan perpendiculaire à l'axe de la poche;

Fig.3 et figure 4 représentent schématiquement la répartition des charges dans deux modes de réalisation de l'invention;

Fig.5 est une vue en élévation d'un mode de réalisation à lissoirs verticaux ;

Fig.6 est une vue de dessus du dispositif de la figure 5 ;

Fig.7 est une vue en élévation, avec coupe partielle , d'un dispositif à arbre de torsion;

Fig.8 est une vue de dessus du dispositif de la figure 7 ;

Fig.9 est une vue partielle de côté de la liaison avec l'arbre de torsion.

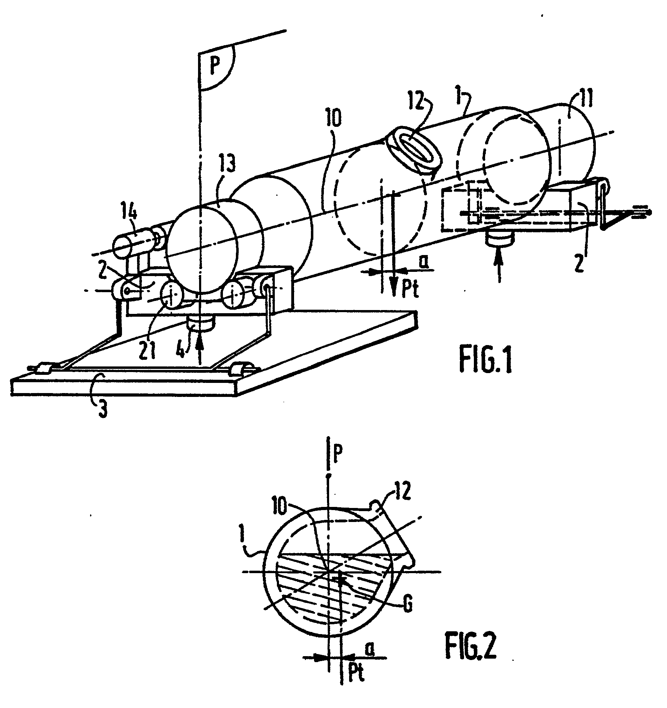

Sur la figure 1, on a représenté schématiquement , en perspective, une enceinte allongée 1 constituant une poche de transport de métal liquide et muni à ses extrémités de deux fusées 11 centrées sur l'axe 10 de l'enceinte . Celle-ci représentée , en coupe transversale, sur la figure 2, est munie d'un orifice de coulée 12 .Les deux fusées 11 sont montées rotatives autour de l'axe 10 chacune sur un support 2.Dans l'exemple représenté sur la figure 1, le support 2 a la forme d'un berceau portant deux galets 21 montés rotatifs chacun autour d'un axe parallèle à l'axe 10 et sur lesquels repose la fusée 11 par l'intermédiaire d'une surface cylindrique 13 .Un mécanisme 14 monté sur le châssis 2 permet de commander le basculement de la poche 1 autour de son axe 10 pour le déversement du métal par l'orifice 12 . Comme on l'a représenté sur la figure 2, du fait de ce basculement , les centres de gravité de la poche et de la fente s'écartent du plan vertical P passant par l'axe 10 dans le sens de basculement , le centre de gravité résultant G de l'ensemble s'écartant d'une distance a.

De façon classique, l'organe de support 2 de chaque fusée constitue un châssis auxiliaire qui s'appuie sur un bâti principal 3 reposant lui-même sur un ou plusieurs boggies non représentés. Selon une disposition décrite dans le brevet n° 82.07385 déjà cité, le châssis auxiliaire 2 est monté oscillant sur sa partie centrale inférieure qui prend appui sur le bâti principal 3 par l'intermédiaire d'un organe central unique 4 centré dans le plan vertical axial P et qui sert en même temps à déterminer la charge contenue dans l'enceinte et appliquée sur chaque fusée.

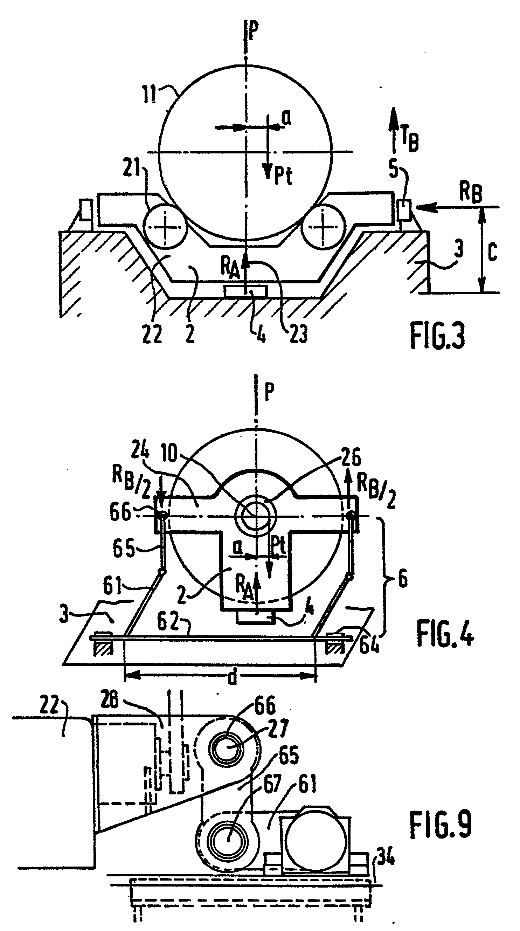

La figure 3 représente schématiquement, en coupe transversale, la répartition des charges et des efforts d'appui dans un dispositif selon l'invention.

Dans le mode de réalisation représenté, la fusée 11 repose , comme on l'a indiqué plus haut, sur deux galets 21 montés rotatifs sur le châssis auxiliaire 2, celui-ci formant un berceau comprenant deux bras 22 portant chacun un galet 21 et qui s'ouvrent en V à partir d'une partie centrale 23 placée à un niveau inférieur à celui des galets et reposant sur l'organe d'appui 4. Ce dernier constitue un plot à graisse en forme de vérin présentant une articulation, comme on l'a décrit dans le brevet 82.073585 déjà cité.

Sur la figure 3, on a indiqué la direction de la charge $P_t$ de métal liquide passant par le centre de gravité G décalé de la distance (a) par rapport au plan axial P.La charge $P_t$ est équilibrée par la réaction $R_A$ du vérin 4 dont on détermine la valeur par mesure de la pression de la graisse . Cependant, du fait du décalage(a) de la charge appliquée , le berceau 2 a tendance à basculer vers la droite et , selon l'une des caractéristiques essentielles de l'invention, il s'appuie latéralement sur une butée 5 fixée sur le bâti principal 3 et constituant un lissoir vertical qui sera décrit plus en détail par la suite .Il résulte de cet appui latéral une réaction d'appui $R_B$ telle que :

$$R_B = \frac{a}{c} \cdot Pt$$

(a) étant le décalage de la charge $P_t$ par rapport au plan axial P et(c)la distance du point d'application de la réaction d'appui $R_B$ par rapport à l'articulation de l'organe d'appui.D'autre part, cet appui latéral détermine également une réaction $T_B$ de frottement sur le lisoir dirigée vers le haut et telle que :
$T_B = k R_B$, k étant le coefficient de frottement.

La réaction $R_A$ du vérin 4 déterminée par mesure de la pression de la graisse correspond donc à:
$R_A = P_t - T_B$

Or, il n'est pas difficile de diminuer sensiblement le coefficient de frottement K par le choix de la nature et de la forme des surfaces en appui et par un graissage approprié .En pratique, on pourra obtenir un coefficient de frottement compris entre 0,1 et 0,15.

On peut montrer que, pour une charge de l'ordre de 700 tonnes et un décalage(a) du centre de gravité ne dépassant pas 80 mm , l'erreur de mesure sur la charge sera inférieure à 10 tonnes alors que, en utilisant des lissoirs horizontaux , l'erreur sur la mesure aurait été supérieure à 30 tonnes.

Sur la figure 4, on a représenté schématiquement un autre mode de réalisation de l'invention. Dans ce cas, tout d'abord, la fusée étant d'assez petite taille, elle est montée rotative sur un palier (26)porté par le châssis de support 2.Comme habituellement, ce châssis 2 repose dans sa partie centrale sur un vérin à graisse 4.

Cependant, dans le mode de réalisation représenté , le châssis 2 est prolongé transversalement de part et d'autre du plan médian P par deux bras 24 qui, selon une caractéristique essentielle de l'invention, sont reliés à un système d'équilibrage 6.Le système 6 comprend deux manivelles 61 calées en rotation sur un arbre de torsion 62 monté rotatif sur le bâti principal 3 autour de deux paliers 64.L'extrémité de chaque manivelle 61 est reliée par une bielle 65 à un point d'attache 66 sur le bras correspondant 24 du châssis auxiliaire 2.

Dans ce cas, si la charge appliquée $P_t$ est décalée par rapport au plan vertical axial P d'une distance (a), la tendance au basculement vers la droite du châssis 2 est équilibrée par deux réactions d'appui sur les manivelles 61 appliquées sur les deux bras 24, l'une dirigée vers le haut, à droite du plan P, et l'autre vers le bas, à gauche du plan P.

Si on appelle (d) la distance horizontale des deux manivelles 61, chaque manivelle encaisse une réaction

$$\frac{R_B}{2} = \frac{a}{d} P_t$$

Etant donné que les deux réactions verticales sur les deux bras 24 sont égales et opposées, le décalage (a) de la charge P n'introduit donc aucune perturbation dans la mesure de la charge, la réaction $R_A$ sur le vérin 4 déterminée par mesure de la pression dans le vérin étant égale à:
$R_A = P_t$.

Bien entendu, les deux formes de réalisation qui viennent d'être décrites peuvent être combinées, le châssis de support 2 pouvant indifféremment supporter le corps de palier ou constituer un berceau d'appui de galets dans le mode de réalisation à lisoirs verticaux ou à manivelles et barres de torsion.

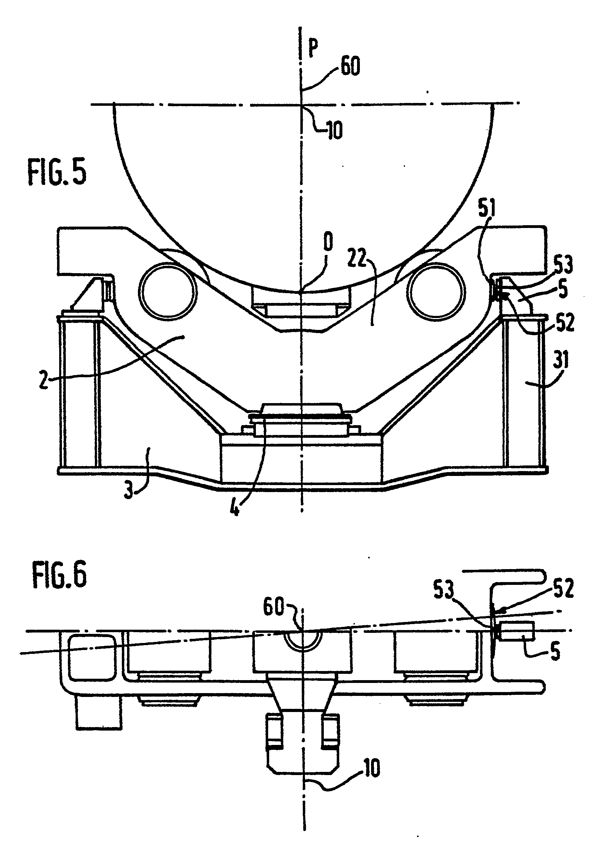

A titre d'exemple, sur les figures 5 et 6, on a représenté plus en détail un mode de réalisation à berceaux et lissoirs verticaux. On voit que le châssis 2 est constitué par un berceau en forme de V dont la partie centrale inférieure repose par l'intermédiaire du vérin 4 sur le bâti 3, ce dernier présentant au niveau du châssis 2 deux appuis latéraux surélevés 31 supportant chacun une butée 5. A la hauteur de la butée 5, chaque bras 22 du châssis 2 est muni d'un plot 51 présentant une face d'appui 52 sensiblement verticale qui, lorsque le châssis 2 est parfaitement vertical, est écartée d'un léger jeu d'une face d'appui correspondante 53 ménagée sur la butée 5. De préférence, la face d'appui 52 a la forme d'une portion de sphère dont le centre 0 est placé dans le plan vertical P. De la sorte, comme on le voit sur la figure 6 qui est une vue de dessus, l'appui du plot 51 sur la butée 5 se fait toujours suivant une direction perpendiculaire au plan P non seulement en cas de basculement du châssis 2 autour d'un axe horizontal mais également, dans les courbes, si le bâti 3 portant la butée 5 vient à tourner autour de son axe 60 par rapport à la poche, comme on l'a représenté en traits mixtes.

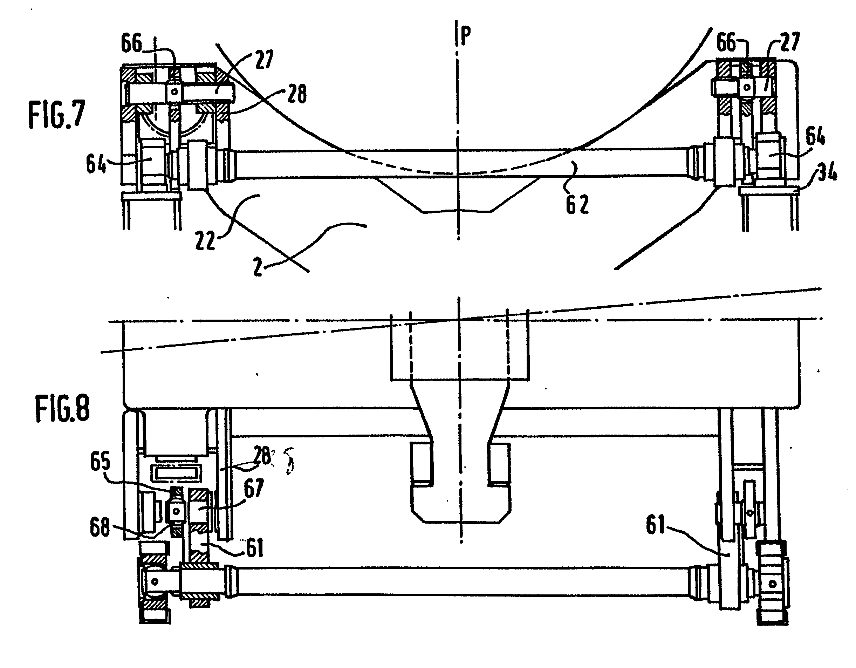

Les figures 7, 8 et 9 représentent, également dans le cas d'un châssis de support en berceau, un équilibrage par barre de torsion. Chaque châssis 2 est en effet associé à une barre de torsion 62 montée rotative à ses extrémités sur deux paliers 64 fixés sur une semelle support 34 solidaire du bâti principal 3 non représenté en détail sur cette figure. A chaque extrémité de la barre de torsion 62 est calée en rotation une manivelle 61 portant à son extrémité libre un axe 67 sur lequel est articulée une bielle 65 par l'intermédiaire d'une rotule 68. A son autre extrémité, la bielle 65 est articulée par l'intermédiaire d'une rotule 66 sur un axe 27 sont les deux extrémités sont portées par une chape 28 parallèle à l'axe 10 de rotation et fixée à l'extrémité du bras 22 correspondant du châssis de support 2.

Comme on l'a indiqué plus haut, un décalage du centre de gravité de la charge par rapport au plan médian P détermine deux réactions verticales égales et opposées appliquées au centre des rotules 66 constituant les points d'attaches des deux bielles sur le châssis 2. GRâce au montage articulé des deux bielles 65, le bâti 3 portant la barre de torsion 62 et les deux manivelles 61 peut tourner légèrement par rapport à l'axe 10 de l'enceinte, comme on l'a représenté en trait mixte sur la figure 8, les déplacements qui en résultent étant absorbés par une orientation des bielles et des manivelles permise par le montage sur rotule.

D'une façon générale, l'invention ne se limite évidemment pas aux deux seuls modes de réalisation qui viennent d'être décrits à titre d'exemple mais couvre au contraire d'autes variantes restant dans le cadre de protection défini par les revendications. En particulier, si l'invention a été mise au point spécialement pour des wagons-poches de transport de fonte liquide, elle pourrait présenter des avantages chaque fois qu'il y a lieu de mesurer une chage lourde dont le centre de gravité peut se déplacer par rapport à ses appuis, par exemple un convertisseur ou un four de fusion de métal. En outre, selon la précision et la qualité de pesare désirées, on peut placer un dispositif de pesée soit à chacune des deux extrémités de la poche comme dans l'exemple représenté soit à une seule des deux extrémités.

**Revendications**

1. Dispositif de support et de mesure d'une charge contenue dans une enceinte (1) montée rotative autour de deux fusées (11) alignées suivant un axe (10) et dans lequel chaque fusée (11) est monté rotative autour de son axe (10) sur un châssis auxiliaire (2) reposant par une partie centrale inférieure (23) sur un bâti fixe (3), par l'intermédiaire d'un organe articulée (4) de support et de mesure, centré dans le plan vertical (P) passant par l'axe de rotation (10) et associé à des moyens d'appui latéraux (5, 6; 61, 62, 65) susceptibles de s'opposer au basculement du châssis auxiliaire (2) d'un côté ou de l'autre dudit plan (P), caractérisé par le fait que les moyens d'appui latéraux (5, 6; 61, 62, 65) sont agencés de façon à exercer sur le châssis auxiliaire (2), par appui sur le bâti fixe (3), un effort résistant au basculement dont la résultante, dans la direction verticale de mesure de la charge soit nulle ou négligeable.

2. Dispositif de support et de mesure selon la revendication 1, caractérisé par le fait que l'organe articulé (4) de support et de mesure est constitué d'un vérin comprenant deux éléments, respectivement un piston monté coulissant dans un corps, et délimitant une chambre de pression remplie d'un fluide dont la pression mesurée est représentative de la charge appliquée sur la fusée correspondante.

3.Dispositif de support et de mesure selon l'une des revendications 1 et 2, caractérisé par le fait que les moyens d'appui latéraux de chaque châssis auxiliaire (2) comprennent, de chaque côté du plan vertical axial (P),un plot (51) à face (52) sensiblement verticale ménagé sur le côté du châssis auxiliaire (2) et prennant appui sur une butée (5) fixée sur le bâti principal (3) et constituant un lissoir à face verticale.

4.Dispositif selon la revendication 3,caractérisé par le fait que la face d'appui(52)de chaque plot (51) a la forme d'une portion de surface sphérique dont le centre ( 0) et placé dans le plan vertical axial (P) au niveau moyen du plot (51).

5.Dispositif selon la revendication 3,caractérisé par le fait que les faces d'appui (52) du plot (51) et (53) de la butée (5) sont traitées de façon à minimiser les frottements .

6.Dispositif de support et de mesure selon l'une des revendications 1 et 2,caractérisé par le fait que les moyens (6)d'appui latéraux de chaque châssis auxiliaire (2) comprennent deux manivelles (61) parallèles, calées en rotation sur un arbre de torsion (62)monté sur le bâti (3) et perpendiculaire au plan vertical axial, lesdites manivelles (61) étant reliées respectivement,chacune par une bielle (65)articulée à ses extrémités, à deux points d'attache (66) sur le châssis,écartées symétriquement de part et d'autre du plan vertical axial (P).

7.Dispositif de support et de mesure selon l'une des revendications précédentes,caractérisé par le fait que chaque fusée (11) est montée rotative dans un palier (26)dont le corps est fixé sur le châssis auxiliaire (2).

8.Dispositif de support et de mesure selon l'une des revendications précédentes,caractérisé par le fait que chaque châssis auxiliaire (2) constitue un berceau comprenant deux bras (22) s'écartant en forme de V à partir d'une partie centrale (23) reposant sur l'organe d'appui (4) et portant chacun au moins un galet (21) de support de la fusée (11) monté rotatif autour d'un axe parallèle à celui (10) de la fusée (11).

**Claims**

1. Device for supporting and measuring a load contained in a cell (1) mounted rotatably about two spindles (11) aligned along an axis (10) and in which each spindle (11) is mounted rotatably about its axis (10) on an auxiliary frame (2) resting by way of a lower central part (23) on a fixed stand (3) via an articulated supporting and measuring member (4) which is centred in the vertical plane (P) passing through the axis of rotation (10) and associated with lateral bearing means (5, 6; 61, 62, 65) capable of opposing the tilting of the auxiliary frame (2) to one ore other side of the said plane (P), characterized in that the lateral bearing means (5, 6; 61, 62, 65) are arranged so as to exert on the auxiliary frame (2), by bearing on the fixed stand (3), a force resisting the tilting, the resultant of which force is zero or negligible in the vertical measuring direction of the load.

2. Support and measuring device according to Claim 1, characterized in that the articulated support and measuring member (4) consists of a jack comprising two elements, a piston mounted slidably in a body, respectively, and defining a pressure chamber filled with a fluid whose measured pressure is representative of the load applied to the corresponding spindle.

3. Support and measuring device according to one of Claims 1 and 2, characterized in that the lateral bearing means of each auxiliary frame (2) comprise, on each side of the axial vertical plane (P), a stud (51) with a substantially vertical face (52), provided on the side of the auxiliary frame (2), bearing against a stop (5) fixed on the main stand (3) and forming a vertical-face friction block.

4. Device according to Claim 3, characterized in that the bearing face (52) of each stud (51) has the shape of a portion of a spherical surface, the centre (0) of which is placed in the axial vertical plane (P) at the mid-level of the stud (51).

5. Device according to Claim 3, characterized in that the bearing faces (52) of the stud (51) and (53) of the stop (5) are treated so as to minimize friction.

6. Support and measuring device according to one of Claims 1 and 2, characterized in that the lateral bearing means (6) of each auxiliary frame (2) comprise two parallel cranks (61) locked in rotation on a torque shaft (62) mounted on the stand (3) and perpendicular to the axial vertical plane, the said cranks (61) being connected respectively, each by a connecting rod (65) articulated at its ends, to two fastening points (66) on the frame which are spaced apart symmetrically on either side of the axial vertical plane (P).

7. Support and measuring device according to one of the preceding claims, characterized in that each spindle (11) is mounted rotatably in a bearing (26), the body of which is fixed to the auxiliary frame (2).

8. Support and measuring device according to one of the preceding claims, characterized in that each auxiliary frame (2) forms a cradle comprising two arms (22) diverging in a V-shape from a central part (23) resting on the bearing member (4) and each carrying at least one roller (21) for supporting the spindle (11) and mounted rotatably about an axis parallel to that (10) of the spindle (11).

**Patentansprüche**

1. Apparat zum Tragen und Messen einer Last in einem Behälter (1), der drehbar um zwei gemäss einer Achse (10) ausgerichteten Achszapfen (11) montiert ist, und in welchem jeder Achszapfen (11) drehbar um seine Achse (10) auf einem Hilfsrahmen (2) angeordnet ist, der mit einem unteren Mittelteil (23) auf einem feststehenden Gestell (3) über ein gelenkiges Stütz- und Messglied aufliegt, das in der durch die Drehachse (10) verlaufende senkrechte Ebene (P) zentriert ist und dem zur Verhinderung einer Kippbewegung des Hilfsrahmens (2) auf die eine oder die andere Seite dieser Ebene (P) seitliche Stützmittel (5, 6; 61, 62, 65) zugeordnet sind, dadurch gekennzeichnet, dass die seitlichen Stützmittel (5, 6; 61, 62, 65) so angeordnet sind, dass sie durch Abstützung auf dem feststehenden Gestell (3) Kippwiderstands-Kräfte auf den Hilfsrahmen (2) ausüben, deren Resultante in der senkrechten Messrichtung der Last gleich Null oder vernachlässigbar ist.

2. Trag- und Messapparat nach Anspruch 1, dadurch gekennzeichnet, dass das gelenkige Stütz- und Messglied (4) aus einem Zylinder mit zwei Teilen besteht, jeweils ein in einem Gehäuse gleitbar montierter Kolben, der eine mit einem Medium gefüllte Druckkammer abgrenzt, dessen gemessener Druck die auf den entsprechenden Achszapfen ausgeübte Last darstellt.

3. Trag- und Messapparat nach einem der Ansprüche 1 und 2, dadurch gekennzeichnet, dass die seitlichen Stützmittel von jedem Hilfsrahmen (2) an jeder Seite der senkrechten Axialebene (P) ein an der Seite des Hilfsrahmens (2) angeordneten Kontaktstück (51) mit einer im wesentlichen senkrechten Fläche (52) aufweisen, das sich auf einem an dem Hauptgestell (2) befestigten Anschlag (5) abstützt und eine senkrechte Stütz- und Gleitfläche bildet.

4. Apparat nach Anspruch 3, dadurch gekennzeichnet, dass die Stützfläche (52) von jedem Kontaktstück (51) als kugelförmiger Flächenabschnitt ausgebildet ist, dessen Mittelpunkt (0) in der senkrechten Axialebene (P) in den mittleren Höhe des Kontaktstückes (51) liegt.

5. Apparat nach Anspruch 3, dadurch gekennzeichnet, dass zur Minderung der Reibungen die Stützflächen (52) bzw. (53) von dem Kontaktstück (51) bzw. von dem Anschlag (5) behandelt sind.

6. Trag- und Messapparat nach einem der Ansprüche 1 und 2, dadurch gekennzeichnet, dass die seitlichen Stützmittel (6) von jedem Hilfsrahmen (2) zwei parallele Kurbeln (61) umfassen, die drehfest auf einer auf dem Gestell (3) lotrecht zur senkrechten Axialebene montierte Torsionswelle (62) verkeilt sind, wobei diese Kurbeln (61) jeweils über eine an ihren Enden gelenkig ausgebildete Stange (65) mit zwei Befestigungspunkte (66) auf dem Rahmen verbunden sind, die beiderseits der senkrechten Axialebene (P) von einander symetrisch entfernt sind.

7. Trag- und Messapparat nach einem der vorhergehenden Ansprüche, dadurch gekennzeichnet, dass jeder Achszapfen (11) drehbar in einem Lager (26) angeordnet ist, dessen Gehäuse auf dem Hilfsrahmen (2) befestigt ist.

8. Trag- und Messapparat nach einem der vorhergehenden Ansprüche, dadurch gekennzeichnet, dass jeder Hilfsrahmen (2) als Wiege mit zwei Armen ausgebildet ist, die V-förmig von einem sich auf dem Stützelement (4) aufliegenden Mittelteil (23) aus auseinandergehen, und jeweils mindestens eine der Achszapfen abstützenden Rolle (21) trägt, die drehbar um eine parallel zur Achse (10) des Achszapfens (11) angeordneten Achse montiert ist.

FIG.1

FIG.2

FIG.3

FIG.4

FIG.9

FIG.5

FIG.6

FIG.7

66 27 28 64 22 2 62 34

FIG.8

65 28 67 68 61 61

EP 0 273 813 B1